# EUROPÄISCHE PATENTSCHRIFT

(11) **EP 0 950 499 B1**
(45) Veröffentlichungstag und Bekanntmachung des Hinweises auf die Patenterteilung: **10.03.2004**
(21) Anmeldenummer: 99107214.1
(22) Anmeldetag: 14.04.1999
(51) Int. Cl.: B29C 47/00, B29C 47/88

(54) **Verfahren zur Herstellung von oberflächenreinen Blasfolien sowie Einrichtung zur Durchführung des Verfahrens**
Method for manufacturing clean blown film and apparatus therefor
Procédé de fabrication de feuilles soufflées ayant des surfaces propres et dispositif pour la mise en oeuvre de ce procédé

(30) Priorität: 16.04.1998 DE 19816869
(43) Veröffentlichungstag der Anmeldung: 20.10.1999
(73) Patentinhaber: Gerling, Ernst-Udo, 33775 Versmold (DE)
(72) Erfinder: Thäle, Eckhard, 33790 Halle (DE)
(74) Vertreter: Patentanwälte Dipl.-Ing. Bodo Thielking Dipl.-Ing. Otto Elbertzhagen

(56) Entgegenhaltungen:
- DE-A- 4 405 463
- DE-U- 9 206 023
- GB-A- 1 207 708
- US-A- 4 818 467
- PATENT ABSTRACTS OF JAPAN vol. 005, no. 043 (M-060), 23. März 1981 (1981-03-23) & JP 55 166225 A (MITSUBISHI PLASTICS IND LTD), 25. Dezember 1980 (1980-12-25)
- DATABASE WPI Section Ch, Week 9022 Derwent Publications Ltd., London, GB; Class A32, AN 90-166878 XP002110762 & JP 02 106321 A (PLACO KK), 18. April 1990 (1990-04-18)
- PATENT ABSTRACTS OF JAPAN vol. 013, no. 415 (M-870), 13. September 1989 (1989-09-13) & JP 01 152034 A (SHOWA DENKO KK), 14. Juni 1989 (1989-06-14)
- PATENT ABSTRACTS OF JAPAN vol. 011, no. 180 (M-597), 10. Juni 1987 (1987-06-10) & JP 62 009941 A (TONEN SEKIYUKAGAKU KK), 17. Januar 1987 (1987-01-17)
- DATABASE WPI Section Ch, Week 9309 Derwent Publications Ltd., London, GB; Class A14, AN 93-070561 XP002110763 & JP 05 016209 A (SHIN NIPPON CHISSO KK), 26. Januar 1993 (1993-01-26)
- DATABASE WPI Section Ch, Week 8322 Derwent Publications Ltd., London, GB; Class A23, AN 83-52525K XP002110764 & JP 58 067416 A (TEIJIN LTD), 22. April 1983 (1983-04-22)
- DATABASE WPI Section Ch, Week 8228 Derwent Publications Ltd., London, GB; Class A32, AN 82-58330E XP002110765 & JP 57 091235 A (HITACHI CABLE LTD), 7. Juni 1982 (1982-06-07)
- ING. (GRAD.) PETER PLESSKE: "Schlauchfolienkühlung - Entwicklungsstand und Auswirkung von Fehlern auf die Folienqualität" KUNSTSTOFFE., Bd. 69, Nr. 4, - April 1979 (1979-04) Seiten 208-214, XP002110761 CARL HANSER VERLAG. MUNCHEN., DE ISSN: 0023-5563

## Beschreibung

Die Erfindung bezieht sich auf Verfahren und auf eine Einrichtung gemäß den Oberbegriffen der Patentansprüche 1 und 3.

Ein solches Verfahren und die zugehörige Einrichtung geht aus der Gebrauchsmusterschrift DE 92 06 023 U1 hervor. Hiernach wird ein den Folienschlauch umgebender, einhüllender Kühlluftstrom vorgesehen, der gleichsam wie ein zylindrischer Vorhang Umgebungseinflüsse, die zu einer ungleichen Kühlung des extrudierten Folienschlauchs führen könnten, fernhält. Dadurch soll verhindert werden, daß ungleichmäßig temperierte Außenluft an den noch nicht erstarrten Folienschlauch gelangt, denn hierdurch würde der Folienschlauch unterschiedlich stark abgekühlt, was zu einer nachteiligen Verschiebung der sogenannten Frostzone führen würde.

Blasfolien der in Rede stehenden Art werden u.a. für Verpackungen von Lebensmitteln, Medikamenten oder medizinischen Präparaten eingesetzt. Bei der Herstellung dieser Folien kommt es auf eine besondere Reinheit der Oberflächen an, die bisher dadurch gewährleistet wird, daß bei der Herstellung der Blasfolien der Aufstellungsraum des Extruders und der nachgeordneten Einrichtungen als Reinraum ausgeführt wird. Hierzu ist es erforderlich, dem Raum gefilterte, von Schwebstoffen befreite Luft zuzuführen sowie den Raum unter einem Überdruck gegenüber dem Umgebungsluftdruck zu halten, um ein Einströmen von Luft von außen her unter Mitnahme von Staubpartikeln auszuschließen. Außerdem müssen alle Zugänge zu dem Reinraum möglichst mit Schleusen versehen sein, um einen Staubeintrag auf diesem Wege ebenfalls auszuschließen.

Selbst bei Anwendung aller aus der Reinraumtechnik bekannten Maßnahmen bleibt aber das Problem bestehen, daß nur eine begrenzte Luftreinheit erreichbar ist. Die Ursache hierfür ist insbesondere der Extruder, der selbst eine Quelle von Luftverunreinigungen darstellt. Selbst wenn ausgeschlossen wird, daß Staubpartikel von außen in den Aufstellungsraum des Extruders gelangen, kommt es dennoch zu einer Staubentwicklung im Inneren des Aufstellraums, die die Oberflächenqualität der erzeugten Folie beeinträchtigt, so daß für bestimmte anspruchsvolle Anwendungszwecke die unter diesen Bedingungen hergestellten Folien nicht verwendbar sind.

Das Dokument DE 22 56 942 A1 zeigt eine Vorrichtung zum Herstellen von Blasfolien, die in all ihren Ausführungen stets mit einem Mantelrohr, also einer festen äußeren Einkapselung des Folienschlauchs ausgestattet ist. Das Mantelrohr weist eine oder mehrere verstellbare Zusatzluft-Zuführungseinrichtungen auf, die an eine Druckluftquelle angeschlossen oder als Induktionseinrichtungen ausgeführt sein können. Zweck dieser Einrichtungen ist eine Beeinflussung der Aufweitung des Schlauchs, um ein vom Blasfolien-Werkstoff unabhängiges Arbeiten der Vorrichtung zu ermöglichen. Hinsichtlich der Eigenschaften der Zusatzluft ist die Einstellung von Luftmenge und -temperatur erwähnt, wobei für die Druckluftquelle vorgesehen ist, daß diese eine Kühlvorrichtung aufweisen kann. Weiter ist dem Dokument entnehmbar, daß bei Ausführung mit einer Induktionseinrichtung zur Zuführung der Zusatzluft diese atmosphärische Luft ist, die in das Mantelinnere mitgerissen wird. Bei diesem Mitreißen von atmosphärischer Luft kommt es zwangsläufig zu einem Staubeindruck in das Mantelinnere und damit auf die Oberfläche der noch nicht vollständig erstarrten und abgekühlten Folien, sofern nicht der ganze Aufstellungsraum der Vorrichtung als Reinraum ausgeführt ist. Zudem ist der Einsatz eines Mantelrohrs in der Praxis nachteilig, weil während der laufenden Produktion der Folienschlauch vom Bedienungspersonal ständig beobachtet werden sollte, um eventuell erforderliche Steuerungsmaßnahmen an den einzelnen Komponenten der Einrichtung zur Folienherstellung vorzunehmen, und weil außerdem bei einer Einkapselung die erforderiche Wärmeabfuhr aus dem die Folie bildenden erhitzten Kunststoffmaterial erschwert wird.

Das Dokument DE 20 06 798 A1 zeigt ebenfalls eine Vorrichtung zur Herstellung von Blasfolien, die speziell für die Herstellung von Folien mit papierartigen Eigenschaften ausgelegt ist. Wesentlich ist bei dieser bekannten Vorrichtung eine Temperaturhomogenisierung im Folienschlauch, d.h. die Erzeugung einer Isothermie, wobei hierzu vorzugsweise der Schlauch von einer Kammer, also einer Einkapselung, umgeben ist, die die Isothermie störende Einflüsse abhält. Die eingesetzte Kühlluft ist hier auf ein Mehrfaches der Raumtemperatur erwärmt und in ihrer Menge einstellbar. Zweck dieser bekannten Vorrichtung ist die Einstellung einer exakten gewünschten Temperatur des Schlauchs für dessen Verstreckung, um die angestrebten papierartigen Eigenschaften zu erreichen. Hinweise im Hinblick auf die Erzeugung besonders reiner Folien gibt das Dokument nicht.

Auch aus dem Dokument DE 36 28 201 A1 ist eine Vorrichtung zur Herstellung von Blasfolien bekannt, die speziell für eine Hochstiel-Extrusion ausgelegt ist. Das hier behandelte Problem besteht darin, daß ein hoher Stiel instabil ist und leicht knittern oder sogar reißen kann, wodurch die Folienqualität vermindert wird oder der Folienschlauch zusammenfällt. Deshalb wird vorgeschlagen, unten und oben am hohen Stiel je einen Kühlluftring zum Ausblasen zweier äußerer Kühlluftströme vorzusehen und innen im Stiel mittels eines Ringspaltes einen weiteren Kühlluftstrom einzusetzen, um den hohen Stiel zu stabilisieren. Im Hinblick auf die Konditionierung der Kühlluft werden ein Temperatursteuergerät sowie Regelventile für die Luft-Geschwindigkeit und den Luft-Volumendurchsatz erwähnt. Als mit dieser Vorrichtung erzielbare Vorteile werden eine verbesserte Gleichmäßigkeit der Dicke und eine verbesserte Reißfestigkeit der Folie genannt. Verfahrens- oder Vorrichtungsmerkmale mit dem Ziel der Erzeugung besonders oberflächenreiner Folien liefert diese Schrift nicht.

Aufgabe der Erfindung ist es, ein Verfahren und eine Einrichtung der eingangs genannten Art zu schaffen, um das Eindringen von Fremdpartikeln in den Folienschlauch zu verhindern und die Herstellung von oberflächenreinen Blasfolien zu ermöglichen.

Diese Aufgabe wird bei einem Verfahren gemäß dem Oberbegriff des Patentanspruchs 1 durch dessen kennzeichnende Merkmale und bei einer Einrichtung gemäß dem Oberbegriff des Patentanspruchs 3 durch die kennzeichnenden Merkmale dieses Patentanspruchs 3 gelöst.

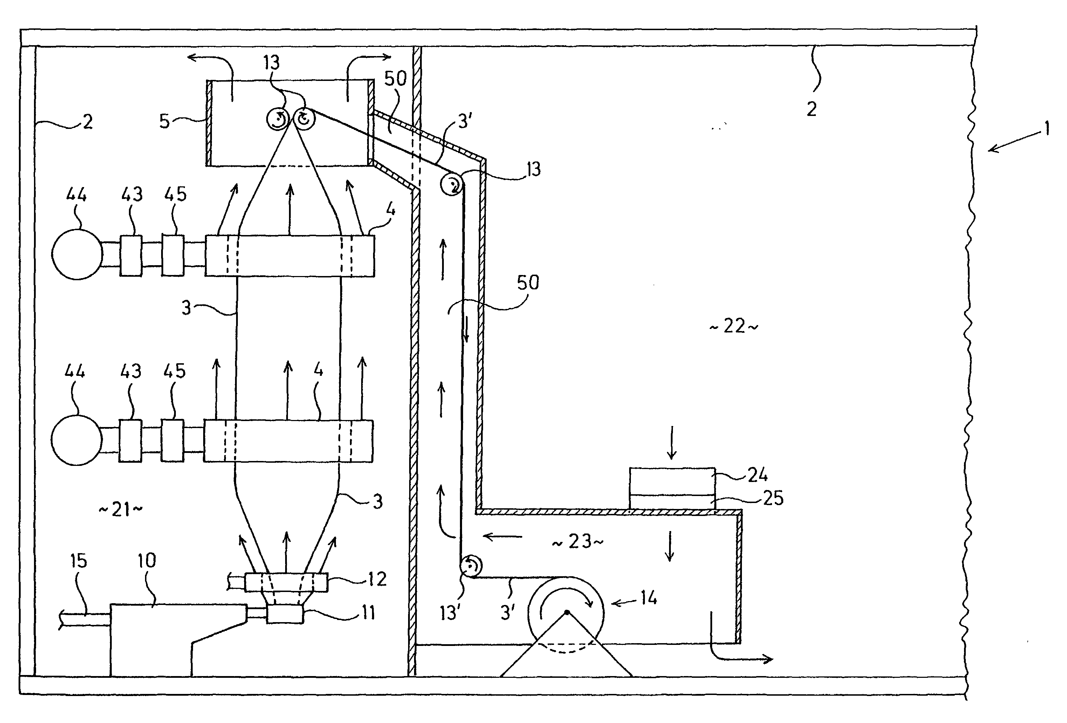

Erfindungsgemäß wird ein ringförmiger Luftschleier aus Reinluft als Sperre für einen Zutritt von Staubpartikeln auf die äußere Oberfläche der Blasfolie eingesetzt, wobei ab den Förderwalzen, welche den abgekühlten und erstarrten Folienschlauch abziehen, dieser durch einen Überdruckkanal bis hin zu der Aufwickel- oder Weiterverarbeitungseinrichtung geführt wird. Diese Einrichtung ist vorzugsweise in einem Reinraum oder in einer reinen Kabine oder auf einer reinen Werkbahn, jeweils mit einem Luftdruck oberhalb des Luftdrucks im Aufstellungsraum des Extruders, angeordnet.
Wird in das Innere des Folienschlauchs Luft eingeführt, so wird auch hierfür reine Luft verwendet. Ein Ausführungsbeispiel einer erfindungsgemäßen Einrichtung wird im folgenden anhand einer Zeichnung erläutert. Die einzige Figur der Zeichnung zeigt eine Einrichtung zur Herstellung von Blasfolien in einer schematischen Seitenansicht, teils im Schnitt.

Die Zeichnung zeigt eine Einrichtung 1 zur Herstellung von Blasfolien. Die Einrichtung 1 ist im Inneren eines Gebäudes 2 angeordnet, das in mehrere Räume unterteilt ist. Im linken Teil der Zeichnung ist ein erster Raum 21 erkennbar, in dem unten ein Extruder 10 angeordnet ist. Dem Extruder 10 ist über eine Förderleitung 15 Kunststoffgranulat zuführbar. Dem Extruder 10 ist ein Extruderkopf 11, der ein Ein- oder Mehrschichtkopf sein kann, zugeordnet, aus welchem ein Folienschlauch 3 extrudierbar ist. Mittels eines in das Innere des Folienschlauchs 3 eingeblasenen Gases wird der extrudierte Folienschlauch auf die gewünschte Schlauchform und -weite expandiert und bis zur Erstarrung in dieser Form gehalten, wie dies an sich bekannt ist. In unmittelbarer Nähe des Extruderkopfes 11 ist knapp über diesem um den Folienschlauch 3 herum ein Kühlring 12 angeordnet, aus welchem oberseitig ringförmig Kühlluft ausblasbar ist, wie dies durch Strömungspfeile angedeutet ist. Auch ein solcher unmittelbar unter dem Expansionsbereich des Folienschlauchs 3 angeordneter Kühlring 12 ist an sich bekannt.

Im weiteren Verlauf des Folienschlauchs 3 sind bei dem dargestellten Ausführungsbeispiel der Einrichtung 1 im vertikalen Abstand vom Kühlring 12 und im vertikalen Abstand voneinander zwei ringförmige Luftdüsen 4 angeordnet, die um den bereits expandierten Folienschlauch 3 herum laufen und aus denen jeweils nach oben zusätzliche Luft ausblasbar ist, wie auch hier durch Strömungspfeile angedeutet ist. Die Luftdüsen 4 sind durch geeignete, hier nicht dargestellte Trageinrichtungen gehaltert und in ihrer Höhenlage relativ zum Extruderkopf 11 und relativ zueinander verstellbar. Die Kühlluft aus dem Kühlring 12 sowie die zusätzliche Luft aus den Luftdüsen 4 bestehen aus gefilterter Reinluft und bilden zusammen einen umlaufenden, geschlossenen Reinluftschleier, der sich parallel zur Bewegungsrichtung des Folienschlauchs 3 in laminarer Strömung und ohne eine äußere Einkapselung nach oben bewegt. Die äußere Oberfläche des Folienschlauchs 3 wird durch diesen Reinluftschleier wirksam und vollständig vor einem Zutritt von Staubpartikeln aus der Umgebungsluft außerhalb des Reinluftschleiers geschützt.

Beim vorliegenden Ausführungsbeispiel der Einrichtung 1 ist jeder ringförmigen Luftdüse 4 ein eigenes Gebläse 44 zugeordnet, von dem aus die Luft zunächst über einen Luftkühler 43 und dann einen Luftfilter 45 zur Luftdüse 4 gelangt. Mittels der Luftkühler 43 kann die zusätzliche, von den Luftdüsen 4 ausgeblasene Luft auf eine gewünschte Temperatur eingestellt werden, so daß mit dieser zusätzlichen Luft aus den Luftdüsen 4 die gezielte Kühlung der zunächst noch heißen Kunststoffmasse, die den Folienschlauch 3 bildet, unterstützt werden kann. Die Luftfilter sorgen für die gewünschte Reinheit, insbesondere Staubfreiheit, der Luft für die Luftdüsen 4. Dabei wird auch dem Kühlring 12 selbstverständlich gefilterte Reinluft zugeführt, was hier nicht eigens dargestellt ist. Die aus dem Kühlring 12 ausgeblasene Luft übt auf die umgebende Luft eine Induktionswirkung aus, wodurch möglicherweise staubhaltige Luft in den Luftschleier gelangen könnte. Um dies sicher auszuschließen, kann durch entsprechend angeordnete, in der Zeichnung nicht dargestellte Luftführungsmittel Reinluft in die Umgebung des Kühlrings 12 geführt werden, sodaß durch die Induktion in diesem Bereich auch nur Reinluft in den Luftschleier gelangen kann.

Nahe dem oberen Ende des Aufstellungsraums 21 ist ein Paar von Förderwalzen 13 angeordnet, zwischen welche der abgekühlte Folienschlauch 3 einläuft und so zu einer doppellagigen Folienbahn 3' zusammengelegt wird. Um die Förderwalzen 13 herum ist eine hohlzylinderförmige Luftströmungsleitwand 5 angeordnet, die dafür sorgt, daß auch im oberen, deckennahen Bereich des Aufstellungsraums 21 die Luftströmung um den oberen Endbereich des Folienschlauchs 3 herum die gewünschte Form behält und daß durch die Decke verursachte Strömungsumlenkungen nicht zu einer Störung des Luftschleiers weiter unten führen. Gewünscht ist eine durchgehende laminare Strömung der reinen Luft vom Kühlring 12 über die beiden Luftdüsen 4 bis in den Bereich der Förderwalzen 13; dieser Reinluftschleier in laminarer Strömung bildet die gewünschte Staubpartikelsperre.

Hinter den Förderwalzen 13 läuft die Folienbahn 3' über mehrere Umlenkrollen 13' zu einer Aufwickeleinrichtung 14, die in einem zweiten Raum 22 des Gebäudes 2 angeordnet ist. Um auch im Bereich der Aufwickeleinrichtung 14 die Folienbahn 3' vor dem Zutritt von Staubpartikeln zu schützen, ist die Aufwickeleinrichtung 14 in einer reinen Kabine 23 angeordnet. Diese reine Kabine 23 wird von oben her mittels eines Gebläses 24 und eines Luftfilters 25 mit reiner, partikelfreier Luft beschickt. Die reine Luft strömt zum Teil nach unten aus der Kabine 23 heraus in den übrigen Raum 22 und zum Teil durch einen die Folienbahn 3 umgrenzenden Überdruckkanal 50 im Gegenstrom zur Folienbahn 3' in das Innere der Luftströmungsleitwand 5, wo diese Luft mit der den Luftschleier bildenden Luft zusammentrifft. Auf diese Weise wird sichergestellt, daß Luft aus dem Raum 22, die Staubpartikel enthalten kann, nicht durch den Kanal 50 in den Bereich des Folienschlauchs 3 gelangen kann.

Da bei der beschriebenen Einrichtung 1 sowohl der Folienschlauch 3 während seiner Abkühlung als auch die abgekühlte und erstarrte Folienbahn 3' während ihres weiteren Transports und ihrer Weiterverarbeitung, hier ihres Aufwickelns auf eine Vorratsrolle, vor einem Zutritt von Staubpartikeln geschützt sind, müssen in den Räumen 21, 22 an sich keine Reinraumbedingungen herrschen. Dadurch wird die Lüftungs- und Wärmetechnik für das Gebäude 2 vereinfacht und die Betriebs- und Unterhaltungskosten des Gebäudes 2 werden reduziert.

## Patentansprüche

1. Verfahren zur Herstellung von Blasfolien, bei dem aus einem in einem Aufstellungsraum (21) aufgestellten Extruder (10) mit mindestens einem Extruderkopf (11) ein Folienschlauch (3) aus thermoplastischem Kunststoff kontinuierlich ausgegeben wird, wobei nahe dem Extruderkopf (11) der Folienschlauch (3) durch in dessen Bewegungsrichtung ringförmig ausgeblasene Kühlluft einer gewünschten Temperatur gekühlt wird, wobei ferner an mindestens einer weiteren, in Bewegungsrichtung des Folienschlauchs (3) dahinterliegenden Stelle zusätzliche Luft ebenfalls ringförmig ausgeblasen wird und die Kühlluft sowie die zusätzliche Luft zusammen in laminarer Strömung einen ringförmigen, den Folienschlauch (3) vom Extruderkopf (11) bis hin zu Förderwalzen (13) umgebenden Luftschleier als Staubpartikelsperre bilden und wobei der abgekühlte und erstarrte Folienschlauch (3) über mindestens ein Paar der Förderwalzen (13) abgezogen und anschließend als Folienbahn aufgewickelt oder weiter verarbeitet wird,
**dadurch gekennzeichnet,**
**daß** sowohl für die Kühlluft als auch für die zusätzliche Luft gefilterte Reinluft verwendet wird und daß ab den Förderwalzen (13) die Folienbahn (3) durch einen Kanal (50) geführt wird, in welchem ein Luftdruck oberhalb des Luftdrucks im Aufstellungsraum (21) des Extruders (10) herrscht.

2. Verfahren nach Anspruch 1,
**dadurch gekennzeichnet,**
**daß** reine Luft in das Innere des Folienschlauchs oder der Folienbahn (3) eingeführt wird.

3. Einrichtung zur Durchführung des Verfahrens nach Anspruch 1 oder 2 mit mindestens einem in einem Aufstellungsraum (21) aufgestellten Extruder (10) mit wenigstens einem Extruderkopf (11), aus dem der Folienschlauch (3) aus thermoplastischem Kunststoff kontinuierlich ausgebbar ist, mit einem den Folienschlauch (3) nahe dem Extruderkopf (11) umgebenden Kühlring (12), aus dem Kühlluft einer gewünschten Temperatur in Bewegungsrichtung des Folienschlauchs (3) ausblasbar ist, mit einer oder mehreren in Bewegungsrichtung des Folienschlauchs (3) gesehen hinter diesem Kühlring (12) angeordneten, ringförmigen Luftdüsen (4), wobei aus dem Kühlring (12) und den Luftdüsen (4) Luft in laminarer Strömung in Form eines ringförmigen, den Folienschlauch (3) bis zu diesen abziehenden Förderwalzen (13) umgebenden Luftschleiers als Staubpartikelsperre ausblasbar ist, und mit einer nachgeordneten Aufwickel- oder Weiterverarbeitungseinrichtung (14) für die erzeuge Folienbahn,
**dadurch gekennzeichnet,**
**daß** Luftfiller zur Reschickung des Kühlringes (12) und der Luftdüsen (4) mit gefilterter Reinluft vorgesehen sind und daß von den Förderwalzen (13) ausgehend ein Überdruckkanal (50) vorgesehen ist, durch den die Folie zur Aufwickel- oder Weiterverarbeitungseinrichtung (14) führbar ist.

4. Einrichtung nach Anspruch 3,
**dadurch gekennzeichnet,**
**daß** die Weiterverarbeitungseinrichtung (14) in einem Reinraum angeordnet ist, in welchem ein Luftdruck oberhalb des Luftdrucks im Aufstellungsraum (21) des Extruders (10) herrschen kann.

## Claims

1. Method for manufacturing blown films in which a foil tube (3) of thermosetting plastics is continuously discharged from an extruder (10) which has at least one extruder head (11) and which is set up in a preparation room (21) whereby near the extruder head (11) the foil tube (3) is cooled through cooling air of a desired temperature which is blown out in a circle in the direction of movement of the tube, whereby furthermore at at least a further point on the output side in the direction of movement of the foil tube (3) additional air is likewise blown out in a circle and the cooling air as well as the additional air together form in a laminar flow a ring-shaped air curtain which surrounds the foil tube (3) from the extruder head (11) to the conveyor rollers (13) to act as a dust particle barrier and whereby the cooled and solidified foil tube (3) is removed through at least a pair of conveyor rollers (13) and then wound up as a foil web or treated further,
**characterised in that**
filtered pure air is used both for the cooling air and for the additional air and that from the conveyor rollers (13) the foil web (3) is guided through a channel (50) in which an air pressure prevails which is above the air pressure in the preparation room (21) of the extruder (10).

2. Method according to claim 1 **characterised in that** clean air is introduced into the inside of the foil tube or the foil web (3).

3. Device for carrying out the method according to claim 1 or 2 having at least one extruder (10) with at least an extruder head (11) and set up in a preparation room (21), from which the foil tube (3) of thermosetting plastics can be continuously discharged, with a cooling ring (12) surrounding the foil tube (3) close to the extruder head (11) from which cooling air of a desired temperature can be blown out in the direction of movement of the foil tube (3), with one or more ring-shaped air nozzles (4) arranged behind this cooling ring (12), seen in the direction of movement of the foil tube (3), wherein air can be blown out from the cooling ring (12) and the air nozzles (4) in a laminar flow in the form of a ring-shaped air curtain acting as a dust particle barrier surrounding the foil tube (3) up to the conveyor rollers (13) which pull on this tube, and with a winding or further processing device (14) mounted on the output side for the foil web thus produced,
**characterised in that**
air filters are provided for supplying the cooling ring (12) and the air nozzles (4) with filtered clean air and that starting from the conveyor rollers (13) an excess pressure channel (50) is provided through which the foil can be moved to the winding or further processing device (14).

4. Device according to claim 3 **characterised in that** the further processing device (14) is mounted in a clean chamber in which an air pressure can prevail which is above the air pressure in the preparation room (21) of the extruder (10).

## Revendications

1. Procédé de fabrication de feuilles soufflées dans le cadre duquel un tuyau en film (3) en matière thermoplastique est extrait en continu d'une extrudeuse (10) qui est installée dans une salle d'implantation (21) et présente, au moins, une tête d'extrusion (11), ledit tuyau en film (3) étant refroidi, à proximité de la tête d'extrusion (11), avec de l'air de refroidissement à une température désirée qui est soufflé en forme d'anneau, dans le sens de déplacement dudit tuyau, de l'air additionnel étant, en outre, soufflée, également en forme d'anneau, à au moins un autre endroit situé en aval, dans le sens de déplacement du tuyau (3), et l'air de refroidissement ainsi que l'air additionnel formant ensemble, en courant laminaire, un voile d'air en forme d'anneau qui entoure le tuyau de film (3), de la tête d'extrusion (11) jusqu'à aux rouleaux d'amenée (13), en tant que pare-poussière, et le tuyau en film (3) refroidi et solidifié étant extrait à l'air à l'aide d'au moins un couple de rouleaux d'amenée (13), puis enroulé en tant que bande de film ou soumis à traitement ultérieur,
**caractérisé en ce que**
l'air utilisé comme air de refroidissement ainsi que comme air additionnel est de l'air pur, filtré et que la bande de film (3) est conduite, à partir des rouleaux d'amenée (13), par un canal (50) dans lequel règne une pression d'air qui est supérieure à la pression d'air qui règne dans la salle d'implantation (21) de l'extrudeuse (10).

2. Procédé selon la revendication 1,
**caractérisé en ce que**
de l'air pur est introduit à l'intérieur du tuyau en film ou de la bande de feuille (3).

3. Dispositif pour la mise en oeuvre du procédé selon la revendication 1 ou 2, avec, au moins, une extrudeuse (10) qui est installée dans une salle d'implantation (21) et est équipée d'au moins, une tête d'extrusion (11), par laquelle le tube en film (3) en matière thermoplastique peut être extrait en continu, d'un anneau de refroidissement (12) qui entoure ledit tuyau en film (3), à proximité de la tête d'extrusion (11) et par laquelle de l'air de refroidissement, présentant une température désirée, peut être soufflé dans le sens de déplacement du tuyau (3), et d'une ou de plusieurs buses d'air annulaires (4), qui, vues dans le sens de déplacement du tuyau en film (3), sont disposées en aval dudit anneau de refroidissement (12), l'air en provenance de l'anneau de refroidissement (12) et des buses d'air (4) pouvant être soufflé, en courant laminaire, en tant que pare-poussière, en forme de voile d'air annulaire qui entoure le tuyau en film (3) jusqu'aux rouleaux d'amenée (13), et d'un dispositif d'enroulement et ou de traitement ultérieur (14) installé en aval, pour la bande de film,
**caractérisé en ce que**
des filtres d'air sont prévus l'alimentation de l'anneau de refroidissement (12) et des buses d'air (4) en air pur, filtré, et qu'un canal à surpression (5), par lequel la feuille peut être conduite au dispositif d'enroulement ou de traitement ultérieur (14), est prévu à partir des rouleaux d'amenée (13).

4. Dispositif selon la revendication 3,
**caractérisé en ce que**
le dispositif de traitement ultérieur (14) est installé dans une chambre propre, dans laquelle peut régner une pression d'air qui est supérieure à la pression d'air régnant dans la salle d'implantation (21) de l'extrudeuse (10).
